# EUROPEAN PATENT APPLICATION

(11) **EP 4 600 527 A1**
(43) Date of publication of application: **13.08.2025**
(21) Application number: 23793405.4
(22) Date of filing: 03.10.2023
(51) Int. Cl.: F16G 15/02, F16G 15/04

(54) **DETACHABLE MOORING CHAIN LINK, CONNECTION SYSTEM AND METHOD FOR DISCONNECTING TWO MOORING CHAINS UNDERWATER**

(30) Priority: 03.10.2022 EP 22382922
(71) Applicant: Vicinay Mooring Connectors, S.A., 48191 Galdames (ES); Vicinay Marine Innovacion (AIE), 48940 Leioa (ES)
(72) Inventor: FERNANDEZ IBAÑEZ, Jonathan, 48940 LEIOA (BIZKAIA) (ES); MENA CORMENZANA, Alexander, 48940 LEIOA (BIZKAIA) (ES)
(74) Representative: Galbaian S.Coop.
(86) International application number: PCT/ES2023/070585
(87) International publication number: WO 2024/074742

(57) **Abstract**

Detachable mooring chain link (100) having an imaginary transverse plane passing through the center of the detachable link (100), dividing it into an upper part for connecting an upper chain (200a) and a lower part for connecting a lower chain (200b), and a body (110) having an upper arched segment (110a), a lower arched segment (110b), and a straight segment (110c) attaching the arched segments (110a, 110b), the body (110) has between the arched segments (110a, 110b) an opening (111) that is closed with a closing piece (120) and a connection point (112) for receiving a lifting force (Lf) which causes the detachable link (100) to swing towards the opening (111) to release the upper mooring chain (200a) from the upper arched segment (110a) through the opening (111), wherein the connection point (112) is arranged in the upper part of the detachable link (100) above the imaginary transverse plane.

## Description

### TECHNICAL FIELD

The present invention relates to a detachable mooring chain link for connecting and disconnecting two mooring chains underwater.

### PRIOR ART

Floating structures, such as drillships or offshore platforms, require being anchored to the seabed so as not to be subjected to displacements that can be caused by sea currents or weather conditions. Anchoring devices which are fixed to the seabed and mooring chains attaching the floating structures with the anchoring devices are used to moor floating structures.

Detachable mooring chain links which are used for connecting and disconnecting mooring chains are known. A detachable link has the shape of a conventional link, i.e., an annular configuration, but it can be opened to be able to connect the end links of two mooring chains, and when it is closed, the two chains are connected, and the detachable link is arranged between the two mooring chains like just another link.

For example, ES2168884A1, which belongs to the same applicant as the present invention, shows a detachable mooring chain link comprising a substantially C-shaped link body, having an upper arched segment for connecting an upper mooring chain, a lower arched segment for connecting a lower mooring chain, and a straight segment attaching the two arched segments. The link body has between the two arched segments an opening which can be closed with a closing piece. For connecting the upper mooring chain with the lower mooring chain, the end links of each chain are introduced through the opening of the link body, and the opening is closed with the closing piece, the end links of each mooring chain being attached by means of the detachable link.

WO2020173925A1 shows another detachable mooring chain link having an upper part for connecting an upper mooring chain and a lower part for connecting a lower mooring chain. The detachable mooring chain link comprises a substantially C-shaped link body, with an upper arched segment for connecting the upper mooring chain, a lower arched segment for connecting the lower mooring chain, and a straight segment attaching the arched segments. Between the free ends of the two arched segments there is an opening that is closed with a closing piece. The closing piece has a straight shape, like the shape of the straight segment, with an end that is attached in rotation with the free end of the lower arched segment, and with the other end that can be connected to and disconnected from the free end of the upper arched segment, for opening and closing the opening. Furthermore, the link has a cross-piece which is arranged with an oblique orientation between the straight segment and the free end of the lower arched segment of the link body. The cross-piece is used for connecting a sling generating a lifting force on the link. That force causes the link to swing towards the opening to release the upper mooring chain from the upper arched segment of the link body through the opening.

In this way, when the lifting force is exerted with the sling, the oblique orientation of the cross-piece makes the sling slide over the cross-piece towards the corner between the cross-piece and the straight segment. The link swivels onto said corner, causing the closing piece to open and the end link of the upper mooring chain to come out through the opening. In that sense, the two mooring chains can be disconnected underwater, in a single operation, pulling on the sling which slides over the cross-piece, without requiring the assistance of an ROV (remote-operated vehicle) for helping in the operation of disconnecting the two mooring chains.

GB2594990 shows another detachable mooring chain link comprising a substantially C-shaped link body having a closed aperture and a closably open aperture with a mouth. The link has a T-shaped closing piece to close the mouth. The link has a connection point for engaging a deployment device for holding and transporting the link.

### DISCLOSURE OF THE INVENTION

The object of the invention is to provide a detachable mooring chain link, a connection system for connecting two mooring chains, and a method for disconnecting two mooring chains underwater, as defined in the claims.

One aspect of the invention relates to a detachable mooring chain link having an imaginary transverse plane passing through the geometric center of the detachable mooring chain link, dividing it into an upper part for connecting an upper mooring chain and a lower part for connecting a lower mooring chain. The detachable mooring chain link comprises a link body having an upper arched segment for connecting the upper mooring chain, a lower arched segment for connecting the lower mooring chain, and a straight segment attaching the arched segments. The link body has between the two arched segments an opening that is closed with a closing piece, and a connection point for receiving a lifting force which causes the detachable mooring chain link to swing towards the opening to release the upper mooring chain through the opening, and wherein the connection point is arranged in the upper part of the detachable mooring chain link above the imaginary transverse plane.

The location of the connection point in the upper part of the link improves the maneuverability of the link when the vertical lifting force is exerted in order to be able to disconnect the two mooring chains underwater. When the connection point receives the lifting force, the detachable mooring link swing with respect to the connection point. That is, the connection point is above the center of mass of the link body, which allows better control of the swinging of the detachable link when it is pulled on vertically.

For example, in WO2020173925A1, the connection point for receiving the lifting force is in the cross-piece, i.e., it is arranged in the lower part of the link, below the imaginary transverse plane, which can hinder the operation for disconnecting the chains underwater. Furthermore, the connection point is not fixed, but rather moves along the cross-piece as the lifting force is exerted with the sling, until the sling abuts with the straight segment of the link; this can cause the sling to engage the cross-piece and cause the sling to become worn due to friction.

Another aspect of the invention relates to a connection system comprising a detachable mooring chain link as defined above, a lower mooring chain with an end link connected with the lower arched segment of the detachable mooring chain link, an upper mooring chain with an end link connected with the upper arched segment of the detachable mooring chain link, and a device which exerts a lifting force at the connection point of the detachable mooring chain link.

One aspect of the invention relates to a method for disconnecting two mooring chains underwater, which comprises:
- using a detachable mooring chain link as defined above, the lower arched segment of which is connected with the end link of the lower mooring chain and the upper arched segment of which is connected with the end link of the upper mooring chain,
- removing the closing piece from the opening with an ROV, and
- exerting a lifting force at the connection point of the detachable mooring chain link in order to cause the detachable link to swing towards the opening of the link body and releasing the end link of the upper mooring chain from the upper arched segment of the link body.

These and other advantages and features of the invention will become apparent in view of the figures and of the detailed description of the invention.

### DESCRIPTION OF THE DRAWINGS

Figure 1 shows an exploded perspective view of an example of the detachable mooring chain link according to the invention. Figure 1 also shows the end links of the mooring chains which are connected with said detachable link.
Figure 2 shows a side view of the detachable mooring chain link of the previous figure without the closing piece.
Figure 3 shows a side view of the link from the previous figure, with the closing piece closing the opening of the link body.
Figure 4 shows a section view of the link of Figure 3, with the closing piece fixed to the straight segment of the link body by means of a screw.
Figure 5 shows another section view of the link of Figure 3, but with the screw being unscrewed and without the closing piece being fixed to the link body.
Figure 6 shows a side view of the link of the previous figures in which the connection point where the lifting force is applied to swing the link is observed.
Figure 7 shows an enlarged detail of Figure 4, and Figure 8 shows an enlarged detail of Figure 5.
Figures 9 to 12 show a sequence of the method for disconnecting two mooring chains underwater using the detachable link of the previous figures.

### DETAILED DISCLOSURE OF THE INVENTION

The invention relates to a detachable mooring chain link 100 which is used for connecting and disconnecting an upper mooring chain 200a and a lower mooring chain 200b underwater. The lower mooring chain 200b is connected, directly or indirectly, with an anchoring device for anchoring to the seabed, and the upper mooring chain 200a is connected, directly or indirectly, to a floating structure.

For the sake of clarity, only the end link 201a of the upper mooring chain 200a and the end link 201b of the lower mooring chain 200b are depicted in the figures.

The detachable mooring chain link 100 comprises an imaginary transverse plane X passing through the geometric center of the detachable link 100, dividing it into an upper part 100a and a lower part 100b. The upper part 100a is configured for connecting the upper mooring chain 200a and the lower part is configured for connecting the lower mooring chain 200b.

The detachable link 100 has a link body 110 having an upper arched segment 110a for connecting the upper mooring chain 200a, a lower arched segment 110b for connecting the lower mooring chain 200b, and a straight segment 110c attaching the arched segments 110a and 110b.

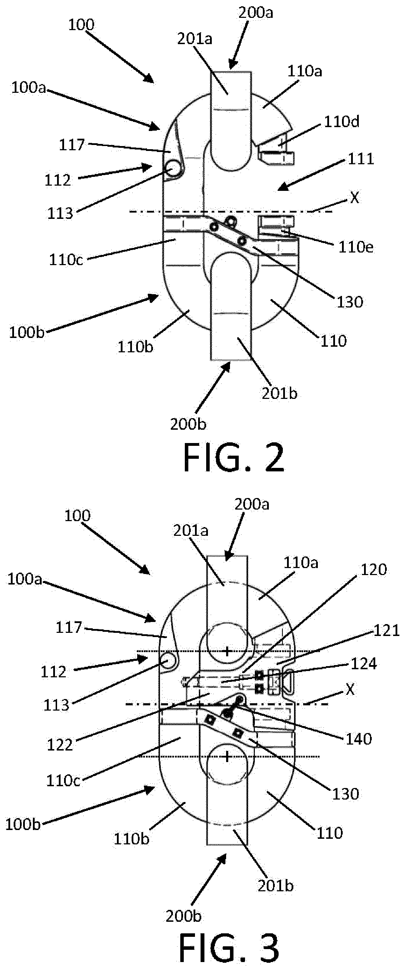

As observed in detail in Figures 2 to 5, the detachable link 100 has an annular configuration. Essentially, the transverse imaginary plane X passes through the center of the link body 110, dividing it into two symmetrical parts. The transverse imaginary plane X essentially passes through the center of mass of the link body 110.

As can be observed in Figure 3, the detachable mooring chain link 100 has an elongated annular shape in the form of an ellipse with a first foci in the upper arched segment 110a and a second foci in the lower arched segment 110b (represented in Figure 3 by two crosses). The imaginary transverse plane X passe through the geometric center of the detachable mooring chain link 100 which is the midpoint of a line segment joining the first and second foci.

Preferably, the link body 110 is C-shaped. Even more preferably, the link body 110 has a cylindrical shape and is obtained from a cylindrical bar which is bent into the C shape.

The link body 110 has between the two arched segments 110a and 110b an opening 111 that is closed with a closing piece 120. When the closing piece 120 is arranged in the opening 111, the link body 110 and the closing piece 120 form a whole link.

The upper arched segment 110a has a free end 110d and another end opposite the free end 110d which is attached to the straight segment 110c. The lower arched segment 110b has a free end 110e and another end opposite the free end 110e which is attached to the straight segment 110c. The opening 111 of the link body 110 is arranged between the free end 110d of the upper arched segment 110a and the free end 110e of the lower arched segment 110b.

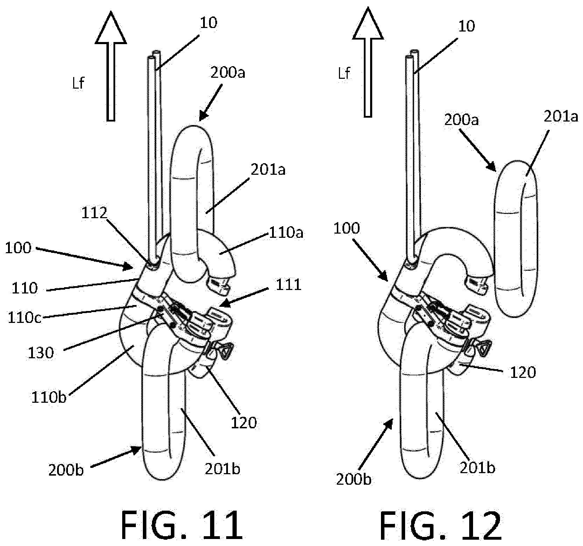

The link body 110 has a connection point 112 for receiving a lifting force Lf which causes the detachable link 100 to swing towards the opening 111 to release the upper mooring chain 200a from the upper arched segment 110a of the link body 110 through the opening 111, as depicted in Figures 11 and 12. According to the invention, the connection point 112 is arranged in the upper part 100a of the detachable link 100 above the imaginary transverse plane X. In that sense, the connection point 112 is arranged above the center of mass of the link body 110, improving the maneuverability of the detachable link 100 in the operation of disconnecting the mooring chains 200a and 200b.

Preferably, the connection point 112 is arranged in the straight segment 100c of the link body 110 above the imaginary transverse plane X. The connection point 112 is thereby arranged above the center of mass of the link body 110 and on the side opposite the opening 111 to facilitate the swinging of the detachable link 100. Even more preferably, the connection point 112 is arranged in the upper part of the straight segment 110c, in an area in which the straight segment 110c is attached to the upper arched segment 110a. Said area is depicted by a curved line in Figure 2 and dotted line in Figure 3. Even more preferably, the connection point 112 is arranged in the outer area of the upper part of the straight segment 110c, i.e., in the area that is the farthest away possible from the opening 111, to improve control over the swinging of the detachable link 100.

The connection point 112 comprises a hole 113 traversing the straight segment 110c for receiving a device 10 which exerts the lifting force Lf. The hole 113 allows arranging a sling 10 which can be connected to a pulley block of a ship for exerting the lifting force Lf on the detachable link 100.

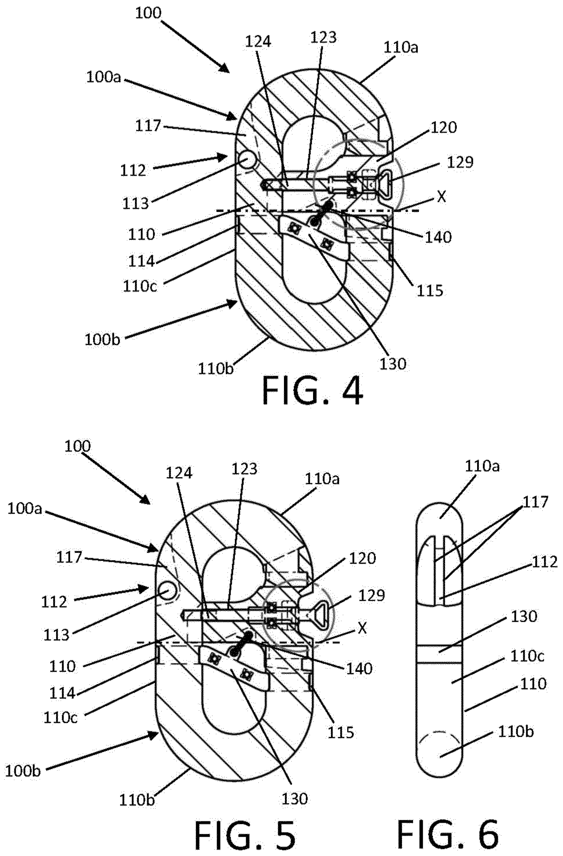

Preferably, as observed in Figure 6, the straight segment 110c has a cylindrical shape, and the connection point 112 is formed by means of two recesses 117 made in the straight segment 110c, according to two planes of section parallel to one another and parallel to the straight segment 110c. Specifically, the two planes of section are parallel to the longitudinal axis of the cylindrical shape of the straight segment 110c. The two recesses 117 favor the connection of the device 10 at the connection point 112. For example, the recesses 117 help to couple a hook to the connection point 112.

The detachable link 100 further comprises a cross-piece 130 which is arranged between the straight segment 110c and the free end 110e of the lower arched segment 110b, the cross-piece 130 being attached to the closing piece 120. The cross-piece 130 increases the rigidity of the detachable link 100 and is further used to keep the closing piece 120 attached to the detachable link 100, preventing the closing piece 120 from being lost when it is removed from the opening 111, or preventing an ROV from having to store it when the opening 111 is not closing.

Preferably, the cross-piece 130 is attached to the closing piece 120 with a cord 140. Even more preferably, the cross-piece 130 is attached to the closing piece 120 with an elastic cord 140. In that sense, when the closing piece 120 is removed from the opening 111, the closing piece 120 is left hanging from the detachable link 100 in the hopes of being placed in the opening 111 again. The elasticity of the cord 140 favors maneuverability of the closing piece 120, since the elastic material of the cord 140 absorbs any jerking that may occur.

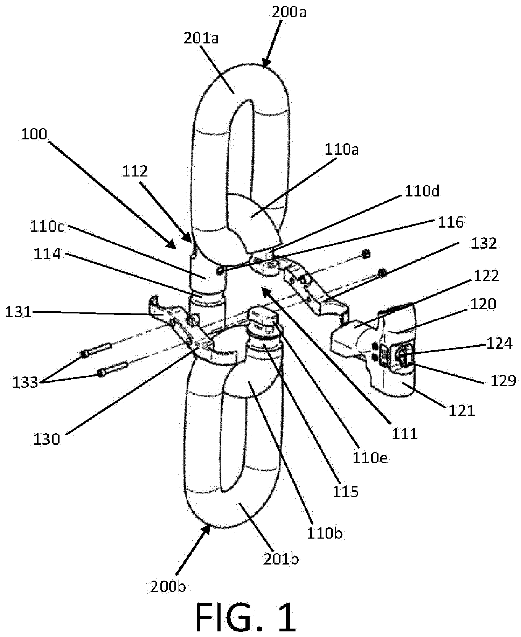

Figure 1 shows how the cross-piece 130 can be coupled to the link body 110. As shown in Figure 1, the cross-piece 130 has a first end, surrounding an annular groove 114 of the straight segment 110c, and a second end, surrounding another annular groove 115 of the free end 110e of the lower arched segment 110b. The cross-piece 130 is thereby retained with respect to the link body 110.

Also, as shown in Figure 1, the cross-piece 130 comprises two parts 131 and 132 that can be separated from one another for disconnecting the lower mooring chain 200b from the lower arched segment 110b. The two parts 131 and 132 can be attached by means of pins 133. The end link 201b of the lower mooring chain 200b can thereby be retained by the cross-piece 130 in the lower arched segment 110b of the link body 110. That is, the two parts 131 and 132 of the cross-piece 130 allow the lower mooring chain 200b to be connected to the detachable link 100, and essentially the detachable link 100 to be part of the lower mooring chain 200b. For example, in a boat the detachable link 100 can be connected with the lower mooring chain 200b which is attached to the anchoring device, and this entire assembly of the detachable link 100, the chain 200b, and the anchoring device can be deposited on the seabed waiting to connect the upper mooring chain 200a.

The closing piece 120 has a first portion 121 and a second portion 122 which projects perpendicularly from the first portion 121 (see Figures 1 and 3), such that when the closing piece 120 closes the opening 111, the first portion 121 extends between the free end 110d of the upper arched segment 110a and the free end 110e of the lower arched segment 110b, and the second portion 122 extends from the first portion 121 to the straight segment 110c of the link body 110. Preferably, the closing piece 120 is T-shaped.

When the closing piece 120 closes the opening 111, the detachable link 100 has an annular configuration like that of a conventional link of a mooring chain. The first portion 121 of the closing piece 120 acts as a straight segment between the free ends 110e and 110d of the arched segments 110a and 110b. That is, the segments 110a, 110b and 110c of the link body 110 and the first portion 121 of the closing piece 120 form the annular shape of the detachable link 100.

The second portion 122 of the closing piece 120 is coupled to half of the straight segment 110c. The second portion 122 assures the fixing of the closing piece 120 in the link body 110 and furthermore provides rigidity to the detachable link 100. The second portion 120 acts as a stud of a conventional link with a stud.

Preferably, the second portion 122 has a free end with a shape that is reciprocal with the shape of the straight segment 110c of the link body 110. The straight segment 110c is cylindrical and has a concave shape, and the free end of the second portion 122 of the closing piece 120 has a convex shape which is coupled to the concave shape of the straight segment 110c.

The free ends 110d and 110e of the arched segments 110a and 110b have a battlement shape which fits into reciprocal shapes of the free ends of the first portion 121 of the closing piece 120.

The closing piece 120 has a hole 123 in which there is housed a screw 124 traversing the first portion 121 and the second portion 122 of the closing piece 120 to fix the closing piece 120 to the straight segment 110c of the link body 110. The screw 124 is actuated by an ROV to lock the closing piece 120 in the opening 111 of the link body 110. The screw 124 remains in the hole 123 of the closing piece 120 even when it is not fixed in the straight segment 110c of the link body 110, therefore, it is not necessary for the ROV to have to store the screw 124 during the operation of disconnecting the mooring chains 200a and 200b.

Preferably, the screw 124 has a threaded end for being fixed in a threaded hole 116 of the straight segment 110c of the link body 110. Alternatively, the screw 124 can be fixed to the straight segment 110c with a pin.

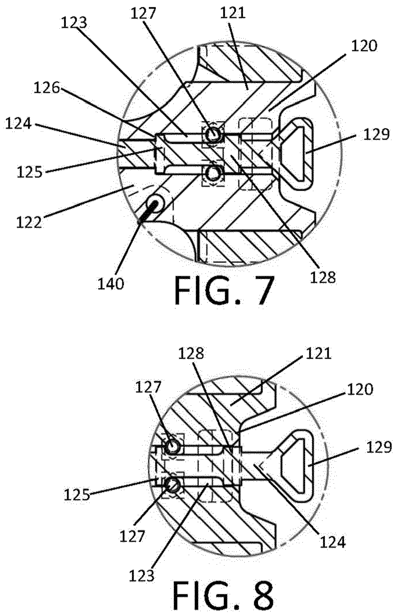

The screw 124 has a first annular protrusion 125 limiting the axial displacement of the screw 124 in the hole 123 of the closing piece 120 between two stops 126 and 127 of the hole 123, as can be observed in detail in the enlarged section views of Figures 7 and 8.

The first stop 126 is configured to contact with the first annular protrusion 125 of the screw 124 and limit the screwing of the screw 124 into the threaded hole 116 of the straight segment 110c of the link body 110, whereas the second stop 127 is configured to contact with the first annular protrusion 125 of the screw 124 and limit the axial displacement of the screw 124, preventing it from coming out of the hole 123.

As observed in Figures 4, 5, 7 and 8, the hole 123 has a first diameter in the second portion 122 of the closing piece 120, and it has a second diameter, larger than the first diameter, in the first portion 121 of the closing piece 120. In that sense, the second diameter defines a widened area of the hole 123 in which the two stops 126 and 127 are located.

The first stop 126 is defined by the transition in which the hole 123 goes from the first diameter to the second diameter. The second stop 127 is formed by two pins traversing the hole 123 in the first portion 121 of the closing piece 120, in which the hole 123 has the second diameter.

Preferably, the screw 124 has a second annular protrusion 128 with a dimension that is reciprocal with the inner diameter of the hole 123 for a tight displacement of the second annular protrusion 128 in the hole 123 and for establishing a leak-tight closure of the hole 123. The second annular protrusion 128 has a diameter that coincides with the second diameter of the widened area of the hole 123, such that said second annular protrusion 128 acts as a sealing gasket, preventing water from getting into the hole 123.

The screw 124 has a handle 129 for being operated by the ROV. Such that the ROV turns the handle 129 in order to screw the free end of the screw 124 into the hole 116 of the straight segment 110c of the link body 110.

The first portion 121 of the closing piece 120 has an inset area where the opening of the hole 123 in the which the screw 124 is inserted is located. When the screw 124 is fixed in the straight segment 110c, fixing the closing piece 120, the handle 129 of the screw 124 is located in said inset area of the first portion 121 of the closing piece 120, such that the handle 129 of the screw 124 does not protrude out (see Figure 7). This allows the detachable link 100 to have an outer geometry similar to that of a conventional link, with no part protruding from the outer geometry of the link.

With all this, the method for disconnecting two mooring chains 200a and 200b underwater which comprises the following steps.

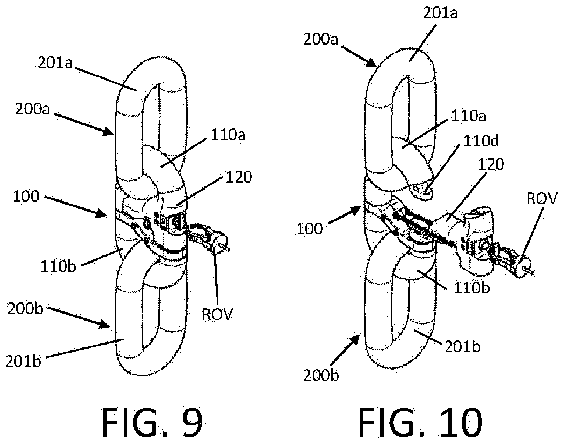

In a first step, as depicted in Figure 9, located underwater is the detachable mooring chain link 100, the lower arched segment 110b of which is connected with the end link 201b of the lower mooring chain 200b and the upper arched segment 110a of which is connected with the end link 201a of the upper mooring chain 200b. The chain 200b would be coupled to an anchoring device for anchoring to the seabed, and the chain 200a would be coupled to a floating structure, which is not depicted in Figure 9 for the sake of clarity.

In a second step, as depicted in Figure 10, the closing piece 120 is removed from the opening 111 with an ROV. In that sense, by means of the ROV the handle 129 of the screw 124 is turned to unscrew it from the hole 116 of the straight segment 110c of the link body 110, and the screw 124 is then pulled on until releasing the free ends 110d and 110e of the arched segments 110a and 110b from the closing piece 120. In that moment, the first annular protrusion 125 of the screw 124 is abutting against the second stop 127 of the hole 123, as depicted in the section of Figure 8. When the closing piece 120 has been removed from the opening 111, the ROV loosens the handle 129 of the screw 124 and the closing piece 120 is left hanging from the cross-piece 130 by means of the cord 140, and with the screw 124 retained in the hole 123, whereby the ROV is free to perform other operations.

In a third step, as shown in Figure 11, a lifting force Lf is exerted at the connection point 112 of the detachable link 100 with the sling 10 in order to cause the detachable link 100 to swing towards the opening 111 of the link body 110, and for the end link 201a of the upper mooring chain 200a to be released from the upper arched segment 110a of the link body 110, as shown in Figure 12.

With all this, there is obtained a connection system comprising the detachable link 100, the lower mooring chain 200b with the end link 201b connected with the lower arched segment 110b of the detachable link 100, the upper mooring chain 200a with the end link 201a connected with the upper arched segment 110a of the detachable link 100, and the device 10 which exerts the lifting force Lf at the connection point 112 of the detachable link 100.

As indicated above, the link body 110 of the detachable link 100 has an outer geometry identical to the end link 201b of the lower mooring chain 200b. Preferably, the detachable link 100 has an outer geometry identical to the outer geometry of the rest of the links of the mooring chains 200a and 200b, such that when the closing piece 120 is arranged closing the opening 111 of the link body 110, the detachable link 100 has an outer geometry identical to that of the rest of the links, the detachable link 100 behaving like just another link of the chains 200a and 200b. This allows the entire assembly to be able to be interrelated with other elements of a mooring line, since the detachable link 100 has the same shape as the rest of the links. For example, the chains 200a and 200b attached by the detachable link 100 can be passed through a tensioner of a mooring line, like the one shown in WO2019166674A1.

## Claims

1. Detachable mooring chain link (100) having an imaginary transverse plane (X) passing through the geometric center of the detachable mooring chain link (100), dividing it into an upper part (100a) for connecting an upper mooring chain (200a) and a lower part (100b) for connecting a lower mooring chain (200b), the detachable mooring chain link (100) comprises a link body (110) having an upper arched segment (110a) for connecting the upper mooring chain (200a), a lower arched segment (110b) for connecting the lower mooring chain (200b), and a straight segment (110c) attaching the arched segments (110a, 110b), the link body (110) has between the two arched segments (110a, 110b) an opening (111) that is closed with a closing piece (120), and a connection point (112) for receiving a lifting force (Lf) which causes the detachable mooring chain link (100) to swing towards the opening (111) to release the upper mooring chain (200a) through the opening (111), **characterized in that** the connection point (112) is arranged in the upper part (100a) of the detachable mooring chain link (100) above the imaginary transverse plane (X).

2. Link according to claim 1, wherein the connection point (112) is arranged in the straight segment (110c) of the link body (110) above the imaginary transverse plane (X).

3. Link according to claim 1 or 2, wherein the connection point (112) comprises a hole (113) traversing the straight segment (110c) for receiving a device (10) which exerts the lifting force (Lf).

4. Link according to the preceding claim, wherein the straight segment (110c) has a cylindrical shape, and the connection point (112) is formed by means of two recesses (117) made in the straight segment (110c), according to two planes of section parallel to one another and parallel to the straight segment (110c).

5. Link according to any of the preceding claims, further comprising a cross-piece (130) arranged between the straight segment (110c) and the free end (110e) of the lower arched segment (110b), the cross-piece (130) being attached to the closing piece (120).

6. Link according to the preceding claim, wherein the cross-piece (130) is attached to the closing piece (120) with an elastic cord (140).

7. Link according to claim 5 or 6, wherein the cross-piece (130) has a first end, surrounding an annular groove (114) of the straight segment (110c), and a second end, surrounding another annular groove (115) of the free end (110e) of the lower arched segment (110b).

8. Link according to any of claims 5 to 7, wherein the cross-piece (130) comprises two parts (131, 132) that can be separated from one another for disconnecting the lower mooring chain (200b) from the lower arched segment (110b).

9. Link according to any of the preceding claims, wherein the closing piece (120) has a first portion (121) and a second portion (122) which projects perpendicularly from the first portion (121), such that when the closing piece (120) closes the opening (111), the first portion (121) extends between the free end (110d) of the upper arched segment (110a) and the free end (110e) of the lower arched segment (110b), and the second portion (122) extends from the first portion (121) to the straight segment (110c) of the link body (110), and wherein the second portion (122) has a free end with a shape that is reciprocal with the shape of the straight segment (110c) of the link body (110).

10. Link according to claim 9, wherein the closing piece (120) has a hole (123) in which there is housed a screw (124) traversing the first portion (121) and the second portion (122) of the closing piece (120) to fix the closing piece (120) to the straight segment (110c) of the link body (110).

11. Link according to the preceding claim, wherein the screw (124) has a first annular protrusion (125) limiting the axial displacement of the screw (124) in the hole (123) of the closing piece (120) between two stops (126, 127) of the hole (123).

12. Link according to the preceding claim, wherein the screw (124) has a second annular protrusion (128) with a dimension that is reciprocal with the inner diameter of the hole (123) for a tight displacement of the second annular protrusion (128) in the hole (123) and for establishing a leak-tight closure of the hole (123).

13. Connection system comprising a detachable mooring chain link (100) according to any of the preceding claims, a lower mooring chain (200b) with an end link (201b) connected with the lower arched segment (110b) of the detachable mooring chain link (100), an upper mooring chain (200a) with an end link (201a) connected with the upper arched segment (110a) of the detachable mooring chain link (100) and a device (10) which exerts a lifting force (Lf) at the connection point (112) of the detachable mooring chain link (100).

14. System according to the preceding claim, wherein the link body (110) of the detachable mooring chain link (100) has an outer geometry identical to the end link (201b) of the lower mooring chain (200b).

15. Method for disconnecting two mooring chains (200a, 200b) underwater which comprises:
• using a detachable mooring chain link (100) according to any of the preceding claims 1 to 12, the lower arched segment (110b) of which is connected with the end link (201b) of the lower mooring chain (200b) and the upper arched segment (110a) of which is connected with the end link (201a) of the upper mooring chain (200b),
• removing the closing piece (120) from the opening (111) with an ROV, and
• exerting a lifting force (Lf) at the connection point (112) of the detachable mooring chain link (100) in order to cause the detachable mooring chain link (100) to swing towards the opening (111) of the link body (110) and releasing the end link (201a) of the upper mooring chain (200a) from the upper arched segment (110a) of the link body (110).
